# EUROPÄISCHE PATENTSCHRIFT

(11) **EP 2 005 015 B1**
(45) Veröffentlichungstag und Bekanntmachung des Hinweises auf die Patenterteilung: **07.03.2012**
(21) Anmeldenummer: 07727324.1
(22) Anmeldetag: 26.03.2007
(51) Int. Cl.: F16C 29/06, G01B 21/00

(54) **LINEARFÜHRUNG**
LINEAR GUIDE
GUIDE LINEAIRE

(30) Priorität: 31.03.2006 DE 102006014943
(43) Veröffentlichungstag der Anmeldung: 24.12.2008
(73) Patentinhaber: Schaeffler Technologies GmbH & Co. KG, 91074 Herzogenaurach (DE)
(72) Erfinder: MENGES, Martin, 66424 Homburg (DE); RUDY, Dietmar, 66501 Kleinbundenbach (DE); REBMANN, Michael, 66453 Niedergailbach (DE)
(86) Internationale Anmeldenummer: PCT/EP2007/052851
(87) Internationale Veröffentlichungsnummer: WO 2007/113152

(56) Entgegenhaltungen:
- DE-A1- 4 102 708
- DE-A1- 10 347 360
- DE-U1- 9 317 161
- US-A1- 2001 015 581
- US-B1- 6 333 628

## Beschreibung

### Gebiet der Erfindung

Die vorliegende Erfindung betrifft eine Linearführung, bei der ein Führungswagen auf einer Führungsschiene längsverschieblich gelagert ist. Derartige Linearführungen finden beispielsweise in Werkzeugmaschinen oder auch in Montagestraßen vielseitige Anwendung.

Aus DE 103 47 360 A1 beispielsweise ist eine Linearführung mit Messeinrichtung bekannt geworden, bei der ein Führungswagen an seiner einen Stirnseite mit einem Messkopf versehen ist. In vielen Anwendungen wird zunehmend gefordert, eine exakte Positionsbestimmung des Führungswagens auf der Führungsschiene zu ermöglichen. Zu diesem Zweck werden an diese Führungswagen die erwähnten Messköpfe angebracht, die an Steuereinrichtungen zum Steuern von Antriebseinheiten weitergeleitet werden. Derartige Messköpfe oder andere Zusatzbauteile, die an den Führungswagen angeflanscht werden sollen, müssen einwandfrei gegenüber der Führungsschiene ausgerichtet sein. Das bedeutet, dass eine Befestigungseinrichtung vorzusehen ist, die es ermöglicht, ein derartiges Zusatzbauteil einwandfrei ausgerichtet an den Führungswagen anzubringen. Gemäß der DE 103 47 360 A1 wird vorgeschlagen, zwischen den Führungswagen und das Zusatzbauteil eine Adapterplatte vorzusehen. Diese Adapterplatte wird mit Hilfe von Schrauben an dem Führungswagen befestigt. Nun folgt ein Planfräsen der Adapterplatte, sodass die planbearbeitete Fläche eine Ebene bildet, die genau orthogonal zur Längsachse A der Führungsschiene verläuft.

Im Anschluss daran wird der komplette Messkopf an der Adapterplatte befestigt, indem Stifte und Anker in die dafür vorgesehenen Positionsbohrungen bez. Aufnahmebohrungen eingesetzt werden. Durch Eindrehen der Gewindestifte in die Querbohrungen erfolgt schließlich eine positionsgerechte Befestigung des Messkopfes an der Adapterplatte.

Der Führungswagen besteht aus einem Tragkörper und stirnseitig an dem Tragkörper angebrachten Kopfstücken. Jedes Kopfstück ist mittels zweier Befestigungsschrauben an dem Tragkörper angeschraubt. Diese Befestigungsschrauben weisen an ihrem von dem Tragkörper abgewandten Ende Gewindebohrungen auf, in die die Befestigungsschrauben der Adapterplatte eingreifen.

Aufgabe der vorliegenden Erfindung ist es, eine Linearführung nach den Merkmalen des Oberbegriffs des Anspruchs 1 anzugeben, die gegenüber der bekannten Linearführung im Hinblick auf die Aufnahme eines Zusatzbauteiles vereinfacht ist.

Erfindungsgemäß wird diese Aufgabe durch die Merkmale des Anspruchs 1 gelöst. Der erfindungsgemäß vorgesehene Zapfen dient unmittelbar der Befestigung des Meßkopfes.

Bei einer erfindungsgemäßen Weiterbildung ist der Zapfen mit einer geneigt zur Zapfenachse angeordneten ersten Richtfläche an einer ersten Gegenfläche des Tragkörpers zur Ausrichtung des Zapfens gegenüber dem Tragkörper vorgesehen. Diese Richtfläche kann beispielsweise eine Schulter sein, die an einer vorbereiteten Gegenfläche des Führungswagens anliegt.

Dadurch, daß der Zapfen das Kopfstück durchdringt, wobei der Befestigungsabschnitt stirnseitig von dem Kopfstück vorsteht, ist sichergestellt, dass der an dem Führungswagen befestigte Zapfen nicht etwa die oftmals aus Kunststoff gefertigten Kopfstücke einspannt, sondern unbelastet lässt. Beispielsweise können diese Kopfstücke mit Durchgangsbohrungen versehen sein, durch die die Zapfen hindurchgeführt sind. Die Kopfstücke an sich können mit weiteren Schrauben an dem Tragkörper befestigt sein.

Der von dem Kopfstück vorspringende Befestigungsabschnitt ist idealerweise so lang bemessen, dass der Meßkopf über seine Tiefe in Achsrichtung des Zapfens gesehen gut gestützt ist.

Der Zapfen liegt mit seiner ersten Richtfläche, beispielsweise Schulter, an einer Gegenfläche des Tragkörpers an und ist somit gegenüber dem Tragkörper und der Führungsschiene einwandfrei ausgerichtet. Diese im Regelfall aus Stahl gebildeten Tragkörper werden mit hohen Genauigkeiten gefertigt, und stirnseitig gegebenenfalls schleifend bearbeitet. Diese Gegenfläche ist jedenfalls einwandfrei ausgerichtet, sodass eine einwandfreie Positionierung und Ausrichtung des Zapfens gegenüber dem Führungswagen gewährleistet ist.

Ebenso wie bei der bekannten Linearführung kann der Zapfen einen Gewindeabschnitt aufweisen, der in eine Gewindebohrung des Tragkörpers eingreift. Zur Montage dieser Zapfen genügt es demzufolge, diesen in die Gewindebohrung einzuschrauben, wobei im eingeschraubten Zustand dann die erste Richtfläche des Zapfens an die Gegenfläche des Führungswagens anschlägt.

Ebenso wie bei der bekannten Linearführung kann der Zapfen an seinem, von dem Führungswagen abgewandten Ende mit einer Gewindebohrung zum Eingriff einer Befestigungsschraube versehen sein. Diese erfindungsgemäße Weiterbildung ist zweckmäßig, wenn der zu befestigende Meßkopf mit einer Bohrung versehen ist, in die der Zapfen mit seinem Befestigungsabschnitt eingreift. Am Ende der Bohrung weist dann das Zusatzbauteil eine Endfläche auf, die zur Anlage an die Stirnfläche des Zapfens vorgesehen ist. Diese Endfläche ist dann vorzugsweise mit einer Durchgangsbohrung versehen, so dass von außen eine Befestigungsschraube durch diese Durchgangsbohrung durchgeführt werden kann, wobei diese Befestigungsschraube in diese Gewindebohrung des Zapfens eingreift. Nach dem Befestigen dieser Befestigungsschraube kann der Meßkopf einwandfrei an diesem Zapfen befestigt sein.

Diese endseitige Stirnfläche des Zapfens kann auch als zweite Richtfläche zum Ausrichten des anliegenden Meßkopfs ausgebildet sein. Diese zweite Richtfläche ist dann vorzugsweise einwandfrei parallel zu der ersten Richtfläche, so dass das fertig montierte Zusatzbauteil einwandfrei an der Führungsschiene positioniert ist.

Idealerweise ist der Führungswagen mit zwei derartigen Zapfen versehen, es können jedoch gegebenenfalls auch nur ein oder auch drei oder vier Zapfen vorgesehen werden. Ein wesentlicher Vorteil besteht darin, dass auf die separate Adapterplatte verzichtet werden kann, wobei ferner sichergestellt ist, dass das Kopfstück des Führungswagens nicht eingeklemmt werden kann, sondern vielmehr unbelastet von dem Zusatzbauteil bleibt.

Nachstehend wird die Erfindung anhand eines in zwei Figuren abgebildeten Ausführungsbeispieles näher erläutert. Es zeigen:
- Figur 1: eine erfindungsgemäße Linearführung in Explosionsdarstellung und
- Figur 2: einen Teillängsschnitt durch diese erfindungsgemäße Linearführung aus Figur 1.

### Ausführliche Beschreibung der Zeichnungen

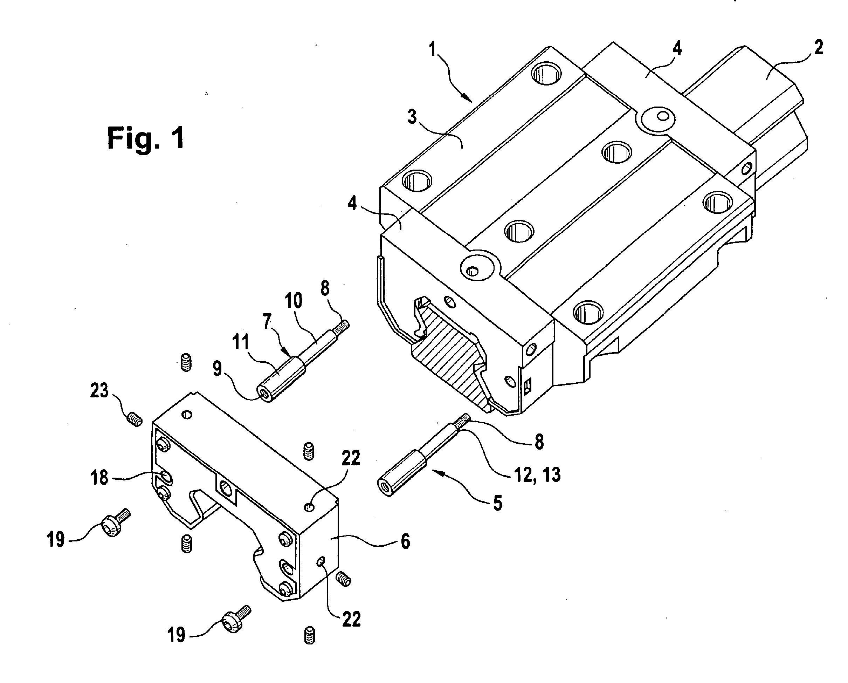

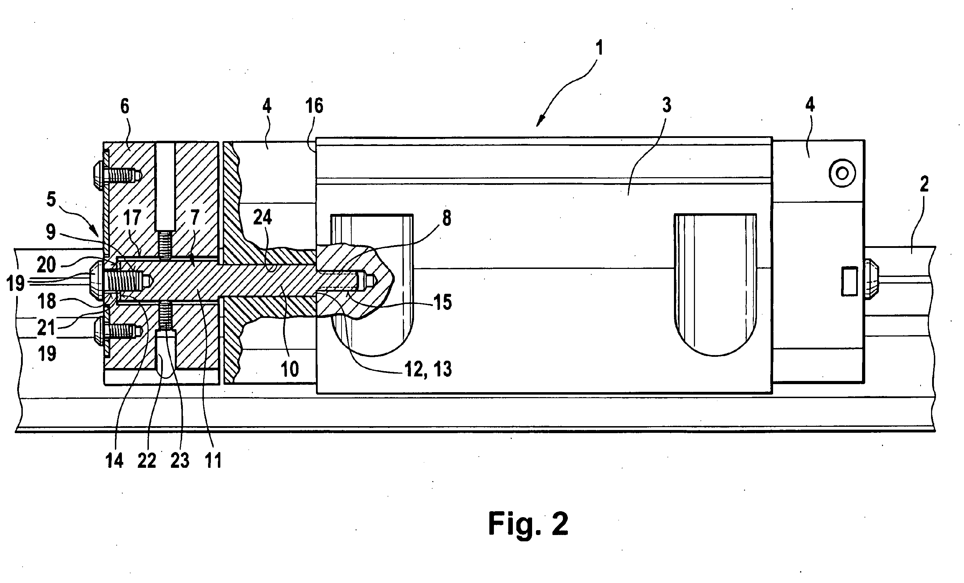

Die in den Figuren 1 und 2 abgebildete erfindungsgemäße Linearführung weist einen Führungswagen 1 auf, der auf einer Führungsschiene 2 längsverschieblich angeordnet ist. Der Führungswagen 1 besteht aus einem aus Stahl gefertigten Tragkörper 3 und aus Kopfstücken 4, die stirnseitig an beiden Enden des Tragkörpers 3 angebracht sind. Diese Kopfstücke 4 sind aus Kunststoff im Spritzverfahren hergestellt.

Der Führungswagen 1 weist hier nicht weiter abgebildete endlose Umlaufkanäle für Wälzkörper auf, wobei jeder Umlaufkanal einen Lastabschnitt, einen Rücklaufabschnitt und zwei den Lastabschnitt mit dem Rücklaufabschnitt endlos verbindende Umlenkabschnitte aufweist. In diesem endlosen Umlaufkanal wälzen im Ausführungsbeispiel Rollen in diesem endlosen Umlaufkanal endlos um. Im Lastabschnitt wälzen die Rollen an Laufbahnen der Führungsschiene 2 und des Tragkörpers 3 ab. Im Rücklaufabschnitt werden die Rollen lastfrei zurückgeführt. Die Kopfstücke 4 sind mit den Umlenkabschnitten versehen, in denen die Rollen umgelenkt werden und aus dem Lastabschnitt in den Rücklaufabschnitt und von dort wieder in den Lastabschnitt geführt werden.

Diese Linearführung ist mit einer Befestigungseinrichtung 5 zum Befestigen eines Messkopfes 6 an den Führungswagen 1 versehen. Diese Befestigungseinrichtung 5 weist Zapfen 7 auf, die an einem Ende jeweils einen Gewindeabschnitt 8 und an ihrem anderen Ende eine Gewindebohrung 9 aufweisen. Von dem Gewindeabschnitt 8 aus gesehen schließen an: ein Durchführungsabschnitt 10 und dahinter ein Befestigungsabschnitt 11. Im Übergang von dem Gewindeabschnitt 8 zu dem Durchführungsabschnitt 10 ist eine Schulter 12 an dem Zapfen 7 ausgebildet. Diese Schulter 12 bildet eine erste Richtfläche 13, die quer zur Zapfenachse und auch quer zur Führungsschiene 2 ausgerichtet ist.

An seinem von dem Führungswagen 1 abgewandten Ende weist der Zapfen 7 eine zweite Richtfläche 14 auf, die parallel zur ersten Richtfläche 13 angeordnet ist.

Die Kopfstücke 4 sind mit Durchgangsbohrungen 15 versehen, durch die die Zapfen 7 mit ihrem Durchführungsabschnitt 10 durchgeführt sind. Die Gewindeabschnitte 8 der Zapfen 7 greifen in Gewindebohrungen 15 ein, die an dem Tragkörper 3 vorgesehen sind. Wenn die Zapfen 7 fest mit dem Tragkörper 2 verschraubt sind, liegen die Schultern 12 der Zapfen 7 an einer Gegenfläche 16 des Tragkörpers 3 an. Diese Gegenfläche 16 sind zugleich die Stirnflächen des Tragkörpers 3, die ohne zusätzlichen Aufwand bereits bei der Herstellung des Tragkörpers erzeugt werden. Wenn die Schulter 12 des Zapfens 7 einwandfrei an der Gegenfläche 16 des Tragkörpers 3 anliegt, ist gewährleistet, dass der Zapfen 7 einwandfrei achsparallel zur Linearführung ausgerichtet ist.

In Figur 2 ist deutlich zu erkennen, dass der Messkopf 6 mit einer Aufnahmebohrung 17 versehen ist, in die der Zapfen 7 mit seinem Befestigungsabschnitt 11 eingreift. Die Länge des Befestigungsabschnittes 11 ist an die Tiefe des Messkopfes 6 angepasst.

Der Messkopf 6 ist an seiner einen Stirnseite mit einer Durchgangsbohrung 18 versehen, wobei eine Befestigungsschraube 19 durch diese Durchgangsbohrung 18 durchgeführt ist und in die Gewindebohrung 9 des Zapfens 7 eingeschraubt ist. Wenn diese Befestigungsschrauben 19 einwandfrei festgezogen sind, ist der Messkopf 6 einwandfrei an dem Zapfen 7 befestigt. Bei der vorliegenden erfindungsgemäßen Linearführung ist ausgeschlossen, dass irgendwelche zum Befestigen des Messkopfes 6 vorgesehenen Befestigungsschrauben das Kopfstück 4 einspannen. Vielmehr ist sichergestellt, dass das Kopfstück 4 spannungsfrei bleibt, und lediglich durch die üblicherweise vorgesehenen Befestigungsmittel an dem Tragkörper 3 befestigt ist.

Im Übergang von der Durchgangsbohrung 18 zur Aufnahmebohrung 17 ist an dem Messkopf 6 eine Schulter 20 gebildet, die entweder ummittelbar zur Anlage an die zweite Richtfläche 14 des Zapfens 7 gelangen kann, oder die alternativ unter Zwischenschaltung eines elastischen Ausgleichsringes 21 an diese zweite Richtfläche 14 angedrückt sein kann.

Der Messkopf 6 ist ferner mit Querbohrungen 22 versehen, die quer zur Zapfenachse ausgerichtet sind, und die von dem Außenumfang des Messkopfes 6 bis in die Aufnahmebohrung 17 reichen. Diese Querbohrungen sind mit Gewindeabschnitten versehen, in die Gewindestifte 23 eingeschraubt sind. Diese Gewindestifte 23 können soweit eingeschraubt sein, bis sie schließlich an die Mantelfläche des Befestigungsabschnittes 11 des Zapfens 7 anschlagen. Da zu beiden Seiten des Zapfens 7 zwei Gewindestifte einander gegenüberliegend und gleichachsig angeordnet sind, kann durch geeignetes Einschrauben dieser Gewindestifte 23 eine zusätzliche Positionierung zur einwandfreien Ausrichtung des Messkopfes 6 vorgenommen werden.

Die Zapfenlänge ist so bemessen, dass unterschiedliche thermische Ausdehnungskoeffizienten von Stahl und Kunststoff kompensiert werden. Es werden keine dem Wälzkörperumlauf bildenden Kunststoffteile geklemmt. Die Tragkörperstirnseite ist mit ausreichender Genauigkeit zur Laufrichtung des Führungswagens gefertigt.

### Bezugszahlenliste

- 1: Führungswagen
- 2: Führungsschiene
- 3: Tragkörper
- 4: Kopfstück
- 5: Befestigungseinrichtung
- 6: Messkopf
- 7: Zapfen
- 8: Gewindeabschnitt
- 9: Gewindebohrung
- 10: Durchführungsabschnitt
- 11: Befestigungsabschnitt
- 12: Schulter
- 13: erste Richtfläche
- 14: zweite Richtfläche
- 15: Gewindebohrung
- 16: Gegenfläche
- 17: Aufnahmebohrung
- 18: Durchgangsbohrung
- 19: Befestigungsschraube
- 20: Schulter
- 21: Ausgleichsring
- 22: Querbohrung
- 23: Gewindestift

## Patentansprüche

1. Linearführung mit einem Meßkopf (6), mit einer Befestigungseinrichtung (5) und mit einem auf einer Führungsschiene 2) längsverschieblich gelagerten Führungswagen (1), der einen Tragkörper (3) und an den Tragkörper (3) stirnseitig angebrachte Kopfstücke (4) aufweist und an den der Messkopf (6) mittels der Befestigungseinrichtung (5) befestigbar ist, **dadurch gekennzeichnet, dass** die Befestigungseinrichtung (5) einen stirnseitig an dem Tragkörper (3) des Führungswagens (1) befestigten Zapfen (7) aufweist, der mit seinem Durchführungsabschnitt (10) durch das Kopfstück (4) hindurchgeführt ist, und der einen stirnseitig von dem Kopfstück (4) des Führungswagens (1) vorstehenden Befestigungsabschnitt (11) aufweist, an dem der Messkopf (6) befestigbar ist.

2. Linearführung nach Anspruch 1, bei der der Zapfen (7) mit einer geneigt zur Zapfenachse angeordneten ersten Richtfläche (13) an einer ersten Gegenfläche (16) des Tragkörpers (3) zur Ausrichtung des Zapfens (7) gegenüber dem Tragkörper (3) anliegt.

3. Linearführung nach wenigstens einem der vorangegangenen Ansprüche, bei der die Länge des Befestigungsabschnittes (11) an die in Achsrichtung des Zapfens (7) erstreckte Tiefe des Meßkopfes (6) angepaßt ist.

4. Linearführung nach Anspruch 2, bei der der Zapfen einen ersten Gewindeabschnitt (8) aufweist, der in eine Gewindebohrung (9) des Tragkörpers (3) eingreift.

5. Linearführung nach Anspruch 1, bei der der Zapfen (7) an seinem von dem Führungswagen (1) abgewandten Ende mit einer Gewindebohrung (9) zum Eingriff einer Befestigungsschraube (19) versehen ist.

6. Linearführung nach Anspruch 1, bei der der Zapfen (7) an seinem von dem Führungswagen (1) abgewandten Ende mit einer zweiten Richtfläche (14) zum Ausrichten des Meßkopfes (6) versehen ist.

## Claims

1. Linear guide, having a measuring head (6), a fastening device (5) and a guide carriage (1) which is mounted in a longitudinally displaceable manner on a guide rail (2), has a supporting body (3) and head pieces (4) which are attached to the supporting body (3) at the front, and to which the measuring head (6), can be fastened by means of the fastening device (5), **characterized in that** the fastening device (5) has a journal (7) which is fastened to the supporting body (3) of the guide carriage (1) at the front, which journal (7) is fed through the head piece (4) by its feed-through portion (10) and has a fastening portion (11) which projects from the head piece (4) of the guide carriage (1) at the front and to which the measuring head (6) can be fastened.

2. Linear guide as claimed in Claim 1, wherein the journal (7) rests with a first alignment face (13), which is arranged inclined relative to the journal axis, against a first opposing face (16) of the supporting body (3) for orienting the journal (7) relative to the supporting body (3).

3. Linear guide as claimed in at least one of the preceding claims, wherein the length of the fastening portion (11) is adapted to the depth, which is extended in the axial direction of the journal (7), of the measuring head (6).

4. Linear guide as claimed in Claim 2, wherein the journal has a first threaded portion (8) which engages with a threaded hole (9) in the supporting body (3).

5. Linear guide as claimed in Claim 1, wherein the journal (7) is provided at its end remote from the guide carriage (1) with a threaded hole (9) for engaging a fastening screw (19).

6. Linear guide as claimed in Claim 1, wherein the journal (7) is provided at its end remote from the guide carriage (1) with a second alignment face (14) for orienting the measuring head (6).

## Revendications

1. Guide linéaire comprenant une tête de mesure (6) avec un dispositif de fixation (5) et avec un chariot de guidage (1) monté de manière déplaçable longitudinalement sur un rail de guidage (2), lequel chariot de guidage présente un corps porteur (3) et des parties de tête (4) montées du côté frontal sur le corps porteur (3) et sur lequel chariot de guidage peut être fixée la tête de mesure (6) au moyen du dispositif de fixation (5), **caractérisé en ce que** le dispositif de fixation (5) présente un tourillon (7) fixé du côté frontal sur le corps porteur (3) du chariot de guidage (1), qui est guidé avec sa portion de guidage d'insertion (10) à travers la partie de tête (4), et qui présente une portion de fixation (11) saillant du côté frontal depuis la partie de tête (4) du chariot de guidage (1), sur laquelle la tête de mesure (6) peut être fixée.

2. Guide linéaire selon la revendication 1, dans lequel le tourillon (7) s'applique, avec une première surface directive (13) disposée de manière inclinée par rapport à l'axe du tourillon, contre une première surface conjuguée (16) du corps porteur (3) en vue de l'alignement du tourillon (7) par rapport au corps porteur (3).

3. Guide linéaire selon au moins l'une quelconque des revendications précédentes, dans lequel la longueur de la portion de fixation (11) est adaptée à la profondeur de la tête de mesure (6) s'étendant dans la direction axiale du tourillon (7).

4. Guide linéaire selon la revendication 2, dans lequel le tourillon présente une première portion filetée (8) qui vient en prise dans un alésage fileté (9) du corps porteur (3).

5. Guide linéaire selon la revendication 1, dans lequel le tourillon (7) est pourvu, sur son extrémité opposée au chariot de guidage (1), d'un alésage fileté (9) pour l'engagement d'une vis de fixation (19).

6. Guide linéaire selon la revendication 1, dans lequel le tourillon (7) est pourvu à son extrémité opposée au chariot de guidage (1) d'une deuxième surface directive (14) pour l'alignement de la tête de mesure (6).
